# EUROPEAN PATENT SPECIFICATION

(11) **EP 2 856 800 B1**
(45) Date of publication and mention of the grant of the patent: **30.05.2018**
(21) Application number: 12877703.4
(22) Date of filing: 30.05.2012
(51) Int. Cl.: H04W 24/02, H04W 52/02, H04W 48/20, H04W 88/10, H04W 92/20

(54) **METHODS AND DEVICES IN COMMUNICATION SYSTEM**
VERFAHREN UND VORRICHTUNGEN IN EINEM KOMMUNIKATIONSSYSTEM
PROCÉDÉS ET DISPOSITIFS DANS UN SYSTÈME DE COMMUNICATION

(43) Date of publication of application: 08.04.2015
(73) Proprietor: Telefonaktiebolaget LM Ericsson (publ), 164 83 Stockholm (SE)
(72) Inventor: KOORAPATY, Havish, Saratoga, California 95070 (US); FRENGER, Pål, S-583 34 Linköping (SE); GUEY, Jiann-Ching, Hsinchu City 30020 (TW)
(74) Representative: Brann AB
(86) International application number: PCT/US2012/039921
(87) International publication number: WO 2013/180694

(56) References cited:
- EP-A1- 2 328 376
- EP-A1- 2 448 339
- WO-A2-2012/004663
- US-A1- 2006 276 192
- US-A1- 2007 123 252
- US-A1- 2010 061 356
- US-A1- 2010 098 025
- US-A1- 2010 309 849
- US-A1- 2011 299 502
- US-A1- 2012 015 657
- US-A1- 2012 044 824
- US-A1- 2012 129 536
- US-B1- 6 584 330

## Description

### Technical field

The technology disclosed herein relates generally to the field of wireless communication systems, and in particular to co-existence of legacy and non-legacy systems within such wireless communication systems.

### Background

A challenge faced by the wireless communication industry is meeting the demand for exponentially growing data traffic. New bandwidth is a scarce resource and possibilities for spectral efficiency improvements are limited, and therefore increasing the density of radio base stations becomes an attractive solution. Due to the nonuniform geographic distribution of wireless traffic, deployment of a so-called Heterogeneous Network (HetNet) comprising radio base stations with different transmit power is widely accepted as an effective solution in covering the service area than the conventional homogeneous network.

Another challenge is to reduce the wireless network's energy consumption, which contributes to the service providers' global carbon emission as well their operating expenses.

The standards for wireless communication evolve to meet these both challenges and give rise to yet another challenge: to maintain backward compatibility.

There are several aspects in overcoming the challenges. Inter-cell interference in a HetNet deployment is very difficult to manage due to the disparity in power level among base stations of the HetNet. If a User Equipment (UE) selects a high power base station with stronger received downlink signal over a low power base station closer in distance as its serving base station, its uplink transmission may not be optimized. In this situation, the UE may need to transmit at very high power to reach its serving base station, thus creating excessive interference to other UEs on the uplink. One solution is to bias the cell selection thresholds so that neither uplink nor downlink suffers serious degradation in signal to interference ratio. Another solution is to define empty frames during which an interfering base station stops transmission to allow an interfered base station to transmit. For energy efficiency improvement, one solution is to mute some of the antennas when the situation allows, so that the power amplifiers driving the muted antennas can be turned off, thereby reducing energy consumption. US 2012/044824 A1 describes controlling cell activation in a radio communication network based on information representative of radio access preferences of an user equipment. The cell activation is controlled by signaling random access (RA) enabling information from a serving radio base station to the user equipment. The user equipment is located in the area of a selected cell to be activated. Further, the user equipment transmits an RA to the radio base station of a second overlapping radio access network to trigger activation of the selected cell. Furthermore, activation of a passive cell can also be triggered by signaling to the corresponding radio base station belonging to the second overlapping radio access network via an Operations Support System (OSS). EP 2328376 A1 describes a handover method, which is used by a mobile station to handover from a serving station to a target zone of a target station.

These solutions are generally features that are compatible with existing standard. However, they do not consider the compatibility issues of future systems.

### Summary

An object of the invention is to overcome or at least alleviate one or more of the above mentioned problems.

A method is provided that enables energy efficient operation of a communication system that is backwards compatible with a legacy system. Sparsely located high power radio nodes multicast legacy signals and thereby forms a cell covering the whole service area of the communication system, the cell providing legacy user devices attachment service to the communication system. More densely located low power radio nodes form a network of non-legacy cells that provide capacity required to serve the non-legacy user devices with much higher data rate. Internetworking between the legacy and non-legacy systems provides seamless mobility management and the ability to power down idle low power radio nodes, thus providing energy efficient and backward compatible communication system.

The object is, according to a first aspect, achieved by a method performed in a second network node of a communication system adapted for wireless communication and comprising a first network node adapted to operate in a mode of operation according to a first communication standard and a user device adapted to operate according to the first communication standard, the first communication standard being a legacy standard. The second network node is adapted to operate in a mode of operation according to a second communication standard and adapted to receive uplink signaling in accordance with the first communication standard, the second communication standard being a non-legacy standard. The method comprises receiving an access request from the user device in accordance with the first communication standard, and enabling a communication channel for the user device by relaying the received access request to the first network node or by switching from the mode of operation according to the second communication standard, to a mode of operation according to the first communication standard.

The object is, according to a second aspect, achieved by a second network node of a communication system adapted for wireless communication and comprising a first network node adapted to operate in a mode of operation according to a first communication standard and a user device adapted to operate according to the first communication standard, the first communication standard being a legacy standard. The second network node is adapted to operate in a mode of operation according to a second communication standard and adapted to receive uplink signaling in accordance with the first communication standard, the second communication standard being a non-legacy standard. The second network node comprises a processor unit configured to: receive an access request from the user device in accordance with the first communication standard, and enable a communication channel for the user device by: relaying the received access request to the first network node or by switching
from the mode of operation according to the second communication standard, to a mode of operation according to the first communication standard.

The object is, according to a third aspect, achieved by a computer program for a second network node of a communication system adapted for wireless communication and comprising a first network node adapted to operate in a mode of operation according to a first communication standard and a user device adapted to operate according to the first communication standard, the first communication standard being a legacy standard. The second network node is adapted to operate in a mode of operation according to a second communication standard and adapted to receive uplink signaling in accordance with the first communication standard, the second communication standard being a non-legacy standard. The computer program comprising computer program code, which, when run on a processor unit of the second network node, causes the processor unit to perform the steps of: receiving an access request from the user device in accordance with the first communication standard, and enabling a communication channel for the user device by relaying the received access request to the first network node or by switching from the mode of operation according to the second communication standard, to a mode of operation according to the first communication standard.

The object is, according to a fourth aspect, achieved by a computer program product comprising a computer program as above, and computer readable means on which the computer program is stored.

Further features and advantages of the various embodiments will become clear upon reading the following description and the accompanying drawings.

### Brief description of the drawings

Figure 1 illustrates schematically a communication system in accordance with an embodiment.
Figure 2 illustrates schematically a communication system in accordance with another embodiment.
Figure 3 illustrates network nodes of the communication system.
Figure 4 illustrates a process flow of a method performed in a first network node.
Figure 5 illustrates a process flow of a method performed in a second network node.
Figure 6 illustrates a schematic view of still another communication system in accordance with an embodiment.
Figure 7 illustrates a process flow of a method performed in a first network node.
Figure 8 illustrates a process flow of a method performed in a second network node.
Figure 9 is a flow chart of a method performed in a communication system.
Figure 10 is a flow chart of a method performed in a second network node.
Figure 11 illustrates a second network node comprising exemplifying means for implementing embodiments of the methods.
Figure 12 is a flow chart of a method performed in a controller.
Figure 13 illustrates a controller comprising exemplifying means for implementing embodiments of the methods.
Figure 14 illustrates a hybrid user device.

### Detailed description of embodiments

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

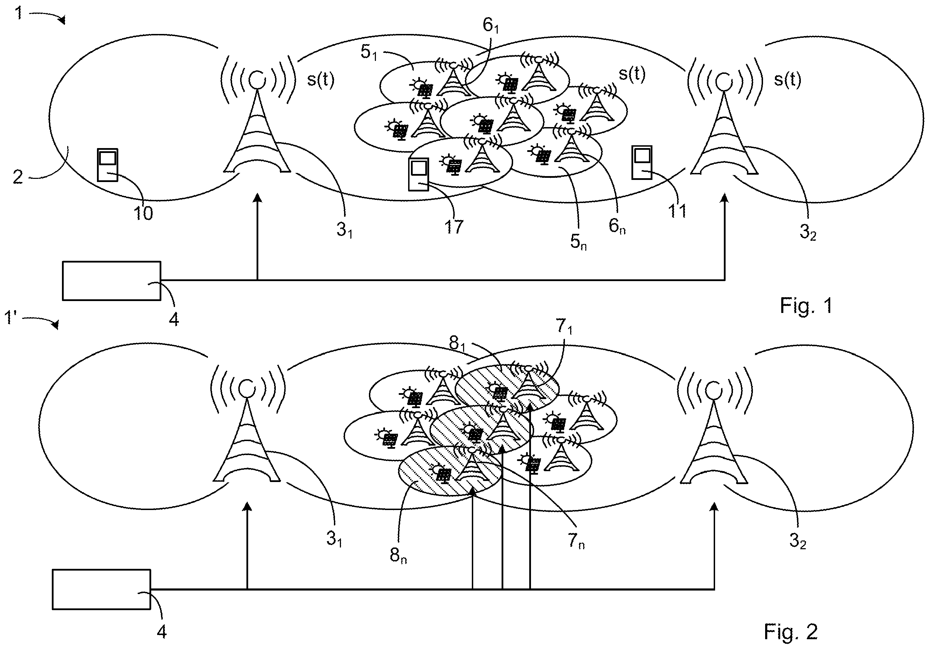

Figure 1 illustrates schematically a communication system 1 in accordance with an embodiment. In an aspect of the present disclosure, sparsely located high power base stations or Remote Radio Units (RRUs) connected to a controller are deployed, forming a backwards-compatible legacy cell. An RRU typically refers to a device comprising mainly radio frequency (RF) components such as antennas, filters and power amplifiers and less intelligence, i.e. less processing capabilities. The RRU is thus typically responsible for the RF functionalities. Two such RRUs 3₁, 3₂ are illustrated in figure 1 and are a sub-set of high power units that together create a legacy cell 2. The RRUs 3₁, 3₂ are in the following also denoted high power RRU and legacy RRU interchangeably. The legacy RRUs 3₁, 3₂ are remotely connected to a controller 4, also denoted legacy controller 4 herein, that is adapted to perform the rest of the functions of a typical base station such as signal processing and radio resource management. The controller 4 and the legacy RRUs 3₁, 3₂ connected to it may thus be considered equivalent to a base station in a cellular network, e.g. equivalent to an enhanced node B (also denoted eNB) in a Long Term Evolution (LTE) system.

The legacy cell 2 thus formed operates in accordance with a first communication standard, e.g. in accordance with a legacy system, for example in accordance with release 8 of LTE. The number of and/or location of the legacy RRUs 3₁, 3₂ should be chosen so that they are sufficient to cover the desired service area. Multiple controllers 4 may be needed to cover the desired service area. The number of legacy RRUs 3₁, 3₂ connected to a control node, in the following denoted controller 4 may vary and depend on factors such as traffic load in that particular area and area of coverage etc. Thus, although only two such RRUs 3₁, 3₂ are illustrated in the figures, the communication system 1 may generally comprise m such RRUs 3₁,..., 3ₘ.

The legacy RRUs 3₁, 3₂ and the legacy cell 2 that they form with the controller 4 thus provide a basic, backward compatible network attachment service. That is, the legacy RRUs 3₁, 3₂ provide a large cell 2 for coverage and thereby provide wireless user devices 10, 11 with access means to the communication system 1. In order to create the legacy cell, the legacy RRUs 3₁, 3₂ connected to the same controller 4 transmit identical signals, i.e. multicast the same signal, such signal being indicated as s(t) in the figure 1. The legacy RRUs 3₁, 3₂ thus form a single frequency network (SFN).

There may be different types of user devices within the communication system 1. A first type is a user device 10 adapted to operate according to the first communication standard, in the following denoted legacy user device 10. The legacy user device cannot distinguish from which RRU 3₁, 3₂ the signal s(t) is transmitted. A user device 10, 11 located in an overlapping coverage area of neighboring legacy RRUs 3₁, 3₂ may benefit from macro diversity gain of receiving the same signal from more than one legacy RRUs 3₁, 3₂. A second type of user device is able to operate in accordance with the first communication standard, and also in accordance with a second communication standard. Such user device 11 is in the following denoted hybrid user device 11. Examples of first and second communication standards comprise a legacy standard and a new standard, respectively, or as a particular example the first communication standard may be release 8 of LTE, and the second communication standard a later release of LTE. A third type of user device 17 comprises a user device 17 able to operate only in accordance with the second communication standard.

As another particular example, a user device may be configured to operate using a lean carrier according to LTE Rel-12 and/or a carrier compatible with LTE Rel-8.

The legacy cell 2 may be configured to be as energy efficient as possible, for example by reducing the carrier bandwidth used for transmitting the signal s(t) to a minimum. For example, the legacy RRUs 3₁, 3₂ may be adapted to use a single transmit antenna format and/or using a maximum number of multi-broadcast SFN (MBSFN) subframes. If the communication system 1 is an LTE system, for example, an extended cyclic prefix may be used, whereby the legacy carrier can be sparsely deployed and transmitted with an SFN format which can greatly reduce the area power consumption, e.g., as expressed in kW/km².

The communication system 1 further comprises low power radio units 6₁,..., 6ₙ that form a network of non-legacy cells 5₁,..., 5ₙ. The low power radio units 6₁,..., 6ₙ are configured to operate in accordance with a new system or new release of a standard, e.g., release 11 of LTE. That is, the low power radio units 6₁,..., 6ₙ are adapted to operate in a mode of operation according to the second communication standard, and are also denoted non-legacy radio units 6₁,..., 6ₙ herein. The new system is not compatible with or not fully compatible with the legacy system. These low power radio units 6₁,..., 6ₙ are deployed mainly (but not necessarily exclusively) in order to increase the system capacity, as opposed to the legacy RRUs 3₁, 3₂ that provide coverage. The low power radio units 6₁,..., 6ₙ may be arranged to operate in frequency spectrums different from that/those of the legacy RRUs 3₁, 3₂.

The use of the legacy cells 5₁,..., 5ₙ for providing user devices 10, 11 access to the communication system 1, allows the low power radio units 6₁,..., 6ₙ to be powered on only when necessary.

It is noted that a legacy carrier, transmitted from the RRUs 3₁, 3₂, can be transmitted with an extended cyclic prefix and the non-legacy carrier transmitted from the non-legacy radio units 6₁,..., 6ₙ can be transmitted with a normal cyclic prefix.

Figure 2 illustrates schematically a communication system 1' in accordance with another embodiment. This communication system 1' comprises all the nodes and functions as described with reference to figure 1, and the same reference numerals are used to indicate these nodes. In addition, the communication system 1' comprises yet another type of low power radio units 7₁,..., 7ₙ comprising means for operating in both the new system and the legacy system. These low power radio units 7₁,..., 7ₙ may comprise means for perform part or all of the functions of the legacy RRUs 3₁, 3₂ in addition to the means for performing the functions of the new system (or new release of a standard) . For example, the low power radio units 7₁,..., 7ₙ may comprise means for receiving uplink signaling in accordance with the first communication standard, but no means for transmitting downlink signaling in accordance with the first communication standard. These low power, non-legacy radio units 7₁,..., 7ₙ are in the following also denoted hybrid radio units, and may be referred to as forming a respective hybrid cell 8₁,..., 8ₙ.

In an embodiment, the hybrid radio units 7₁,..., 7ₙ may be connected to the controller 4 by means of a wired or wireless link (such a connection is indicated by the arrows in the lower part of the figure 2). When the hybrid radio unit 7₁,..., 7ₙ is connected to one or more of the controllers 4, it may be configured to transmit the same downlink signal s(t) as is being multicast by the legacy RRUs 3₁, 3₂ connected to the same controller 4. To this end, the hybrid radio units 7₁,..., 7ₙ then comprise circuitry adapted for transmitting legacy downlink signals s(t). This may be advantageous and even necessary in areas, such as e.g. indoor or basement environments, where the legacy RRUs 3₁, 3₂ may have poor or no coverage. Figure 2 thus illustrates that in accordance with aspects of the present disclosure, the radio units deployed in a service area may comprise different categories of devices: legacy nodes, non-legacy nodes and hybrid nodes.

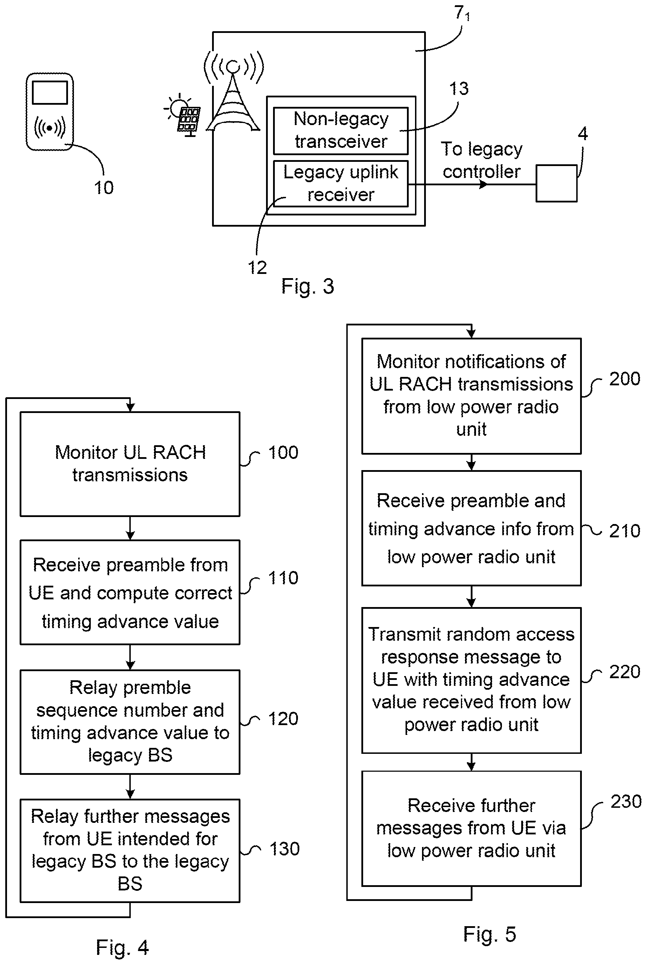

Figure 3 illustrates network nodes of the communication system 1, 1'. In an embodiment, the hybrid radio unit 7₁ comprises circuitry 12 for receiving uplink legacy signal, i.e. a signal transmitted by a legacy user device 10. Such circuitry 12, in the following denoted legacy uplink receiver 12, may for example comprise radio receiver circuitry such as antennas, demodulator etc. and be adapted to receive the legacy uplink signal. The legacy uplink receiver 12 may be implemented by, e.g., software or hardware or any combination thereof.

The hybrid radio unit 7₁ further comprises communication means, such as an input/output device or other interface for communication with the controller 4 over a wired or wireless link. Thereby uplink signals from the legacy user device 10 can be relayed to the legacy RRU 3₁, 3₂. This is particularly convenient and even necessary in case the transmit power of the legacy user device 10 is not high enough to reach the sparsely deployed high power legacy RRUs 3₁, 3₂.

Relaying signals received by the hybrid radio unit 7₁ (by using the legacy uplink receiver 12) from the legacy user device 10 to the legacy RRU 3₁, 3₂ is also valuable during the initial random access process, wherein the legacy user device 10 requests access to the communication system 1, 1'. In a first step of such process, the legacy user device 10 sends a random-access preamble to the communication system 1, 1'. This preamble is used by the communication system 1, 1' in order to determine the transmit timing that the legacy user device 10 should use. In a second step of the process, the communication system 1, 1' transmits a timing advance command to communicate the correct transmit timing to the legacy user device 10. In an embodiment, all such access messages from the legacy user device 10 are received by the hybrid radio unit 7₁ instead of the legacy RRU 3₁, 3₂ due to the limited uplink transmitted power used by the legacy user device 10. The hybrid radio unit 7₁ may therefore uses the preamble transmitted by the legacy user device 10 in order to determine the correct transmit timing with respect to its own frame timing (of the second communication standard), the preamble and the associated correct timing advance command may the be relayed to the legacy RRU 3₁, 3₂, which then communicates the timing advance on the downlink to the legacy user device 10. Thereby, the hybrid radio unit 7₁ does not need to comprise circuitry for handling downlink signaling according to the legacy system (i.e. according to the first communication protocol). All subsequent messages are relayed via the hybrid radio unit 7₁ to the legacy RRU 3₁, 3₂, on the uplink, wherein the legacy user device 10 is using the communicated timing advance value to adjust its transmit timing (in view of the transmit timing of the first communication standard).

Figures 4 and 5 illustrate the above-described features in flow charts for the respective nodes. In particular, figure 4 illustrates a process flow of a method performed in the hybrid radio unit 7₁. In box 100, the hybrid radio unit 7₁ monitors uplink radio access channel (UL RACH) transmissions from user devices 10. In box 110, a preamble is received from a legacy user device 10 and the hybrid radio unit 7₁ determines e.g. by calculations, the correct timing advance value. In box 120, the hybrid radio unit 7₁ relays the preamble sequence number and timing advance value to a legacy RRU 3₁, 3₂ via the controller 4 connected to them. Finally, in box 130, the hybrid radio unit 7₁ relays to the legacy RRU 3₁, 3₂ all further messages from the legacy user device 10 that are intended for the legacy RRU 3₁, 3₂.

Figure 5 illustrates a process flow of a method performed in the legacy RRU 3₁, 3₂. It is assumed that the RRU 3₁, 3₂ is unable to directly receive signals from the legacy user device 10, i.e., it is unable to "hear" the legacy user device 10, for example due to a low transmission power used by the legacy user device 10 and/or due to the distance between the legacy RRU 3₁, 3₂ and the legacy user device 10. In box 200, the legacy RRU 3₁, 3₂ monitors notifications of UL RACH transmissions from the hybrid radio unit 7₁. In box 210, the legacy RRU 3₁, 3₂ receives, from the hybrid radio unit 7₁, information about preamble and timing advance for a legacy user device 10. In box 220, the legacy RRU 3₁, 3₂ transmits a random access response to the legacy user device 10 using a timing advance value received from the hybrid radio unit 7₁. In box 220, the legacy RRU 3₁, 3₂ receives further messages from the legacy user device 10 via the hybrid radio unit 7₁.

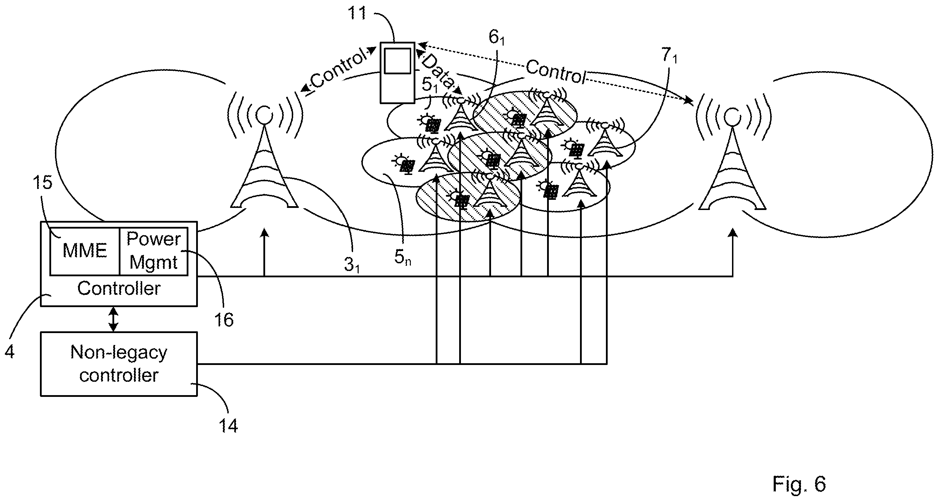

Figure 6 illustrates a schematic view of still another embodiment of the communication system 1, 1'. In addition to serving as part of a legacy base station (together with the legacy RRUs 3₁, 3₂), the controller 4 may also comprise circuitry for implementing functionalities that interact with the non-legacy system. In particular, the non-legacy radio unit 6₁,..., 6ₙ are controlled by a non-legacy controller 14, and the legacy controller 4 is, in an embodiment, adapted to interact with the non-legacy controller 14, e.g., exchanging information with it. A hybrid user device 11, able to communicate with the legacy system, and in particular with the legacy RRUs 3₁, 3₂, over the air-interface may receive instructions and transmit measurements during such interaction. Such communication is indicated in the figure by an arrow denoted "control". The hybrid user device 11 is also able to exchange signaling with the non-legacy radio unit 6₁ and e.g. measurements made by the hybrid user device 11 may be conveyed between the controller 4 and the non-legacy controller 14. The non-legacy radio unit 6₁ may be connected to the controller 4 directly or indirectly through another network node, such as the non-legacy controller 14, through a proprietary or standardized interface. In figure 6, the arrows indicate communication links between nodes of the communication system 1, 1'.

In an embodiment, and still with reference to figure 6, the controller 4 serves as a mobility management entity (MME) 15 for the non-legacy system. Since the low power non-legacy cells 5₁,..., 5ₙ typically have very small coverage areas, handoffs from cell to cell may be very frequent and requires low latency. The controller 4 may use the legacy system to maintain the session continuity of the hybrid user device 11 during non-legacy cell handoff, during which the hybrid user device 11 still remains in the same legacy cell 2. The controller 4 may also utilize the data channels of the legacy cell 2 in order to deliver control information to the non-legacy cells 5₁,..., 5ₙ involved in the handoff.

In yet another embodiment, the controller 4 may also be configured to activate or deactivate the hybrid radio units 7₁,..., 7ₙ according to the traffic loading conditions. To this end, the controller 4 may comprise a power management unit 16, e.g., a processor able to read and execute instructions from a computer program. If there is no active user device that is capable of only operating in the non-legacy system within the coverage area of a hybrid cell 8₁, ..., 8ₙ and the traffic load generated by other categories of user devices 10, 11 within that cell can be served by the legacy RRUs 3₁, 3₂, the controller 4 may be configured to choose to deactivate the hybrid cell 8₁, ..., 8ₙ. That is, since all user devices within the cell are able to operate in accordance with the first and second communication standard or in accordance with the first communication standard, i.e., comprise legacy user device 10 or hybrid user device 11, they may be serviced by the legacy RRUs 3₁, 3₂. In an extreme case, all of the hybrid radio units 7₁,..., 7ₙ may be deactivated while only the high power legacy RRUs 3₁, 3₂ are active in order to maintain a minimum service to all user devices in the serving area, thereby significantly improving the energy efficiency of the communication system 1, 1'.

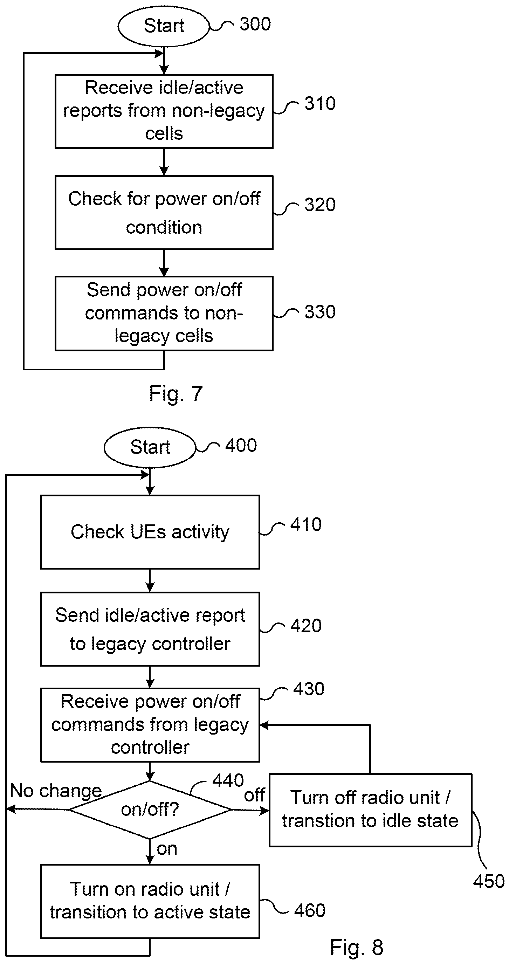

The above-described feature is next with reference to figures 7 and 8. Figure 7 illustrates a process flow of a method performed in the controller 4. In box 300, the energy efficient operation starts. In box 310 the controller 4 receives reports from hybrid radio units 7₁,..., 7ₙ, the reports comprising information on idle/active status, e.g. an idle report if a particular cell provided by a hybrid radio units 7₁,..., 7ₙ does not comprise any user device only capable of operating in the non-legacy system. In box 320, the controller 4 checks if conditions for powering the hybrid radio units 7₁,..., 7ₙ on or off are fulfilled. Such conditions may be, for example, the given example of the report indicating that the cell comprises no user devices that are only capable of operating in the non-legacy system. In box 330, the controller 4 sends a power on or power off command as determined in box 320 to the hybrid radio unit 7₁,..., 7ₙ controlling the cell in concern.

Figure 8 illustrates a process flow of a method performed in the hybrid radio unit 7. In box 400, the energy efficient operation starts. In box 410, the hybrid radio unit 7₁ checks the activity of the user devices located within its cell 8₁, e.g. what type of user devices are active. In box 420, the hybrid radio unit 7₁ sends a report based on this, i.e. report on it being able to be idle or required to be active depending on types of user devices within its coverage area (cell 8₁), to the controller 4 (compare box 310 of figure 7). In box 430, the hybrid radio unit 7₁ receives a power on/off command from the controller 4 (compare box 330 of figure 7). In box 440, it is determined whether to power on or power off. If the hybrid radio unit 7₁ should power off, the flow continues to box 450, whereby the hybrid radio unit 7₁ or parts thereof may be turned off and the hybrid radio unit 7₁ enters to an idle state. If there is no change of status of the hybrid radio unit 7₁, the flow returns to box 410. If the hybrid radio unit 7₁ should enter an active mode, i.e. be turned on, the flow continues to box 460, wherein the hybrid radio unit 7₁ is turned on, thus entering an active state. The flow then returns to box 410.

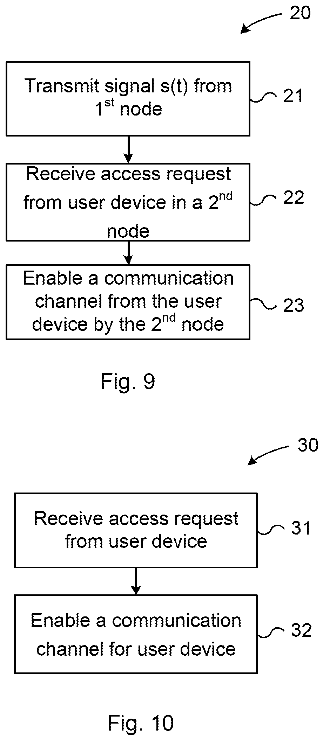

Figure 9 is a flow chart of a method performed in a communication system, the method 20 involving the legacy RRU 3₁, 3₂, in the following denoted first network node, and the hybrid radio units 7₁,..., 7ₙ, in the following denoted second network node. The method 20 is performed in a communication system 1, 1' as described, i.e., in a communication system adapted for wireless communication and comprising the first network node 3₁, 3₂, which in turn is adapted to operate in a mode of operation according to a first communication standard, for example the legacy system as described and previously exemplified by release 8 of LTE. The first network node 3₁, 3₂, may be part of an SFN legacy cell 2 and supporting the use of a legacy carrier.

The communication system 1, 1' also comprises the second network node 7₁,..., 7ₙ, which is adapted to operate in a mode of operation according to a second communication standard, for example a later release of the LTE standard than the one that the first network node operates under. The second network node 7₁,..., 7ₙ is further adapted to receive uplink signaling in accordance with the first communication standard. In an embodiment, the second network node 7₁,..., 7ₙ comprises only an uplink receiver that is compatible with the first communication standard, i.e. does not have means for transmitting downlink signaling in accordance with the first communication standard. The second network node 7₁,..., 7ₙ comprises receiver circuitry and transmitter circuitry for exchanging data with user devices operating under the second communication standard.

The method 20 comprises transmitting 21, from the first network node 3₁, 3₂, an attachment signal enabling a legacy user device 10 to obtain access to the communication system 1, 1'. As has been described, the legacy user device 10 is adapted to operate according to the first communication standard, e.g. in accordance with release 8 of LTE. The attachment signal comprises essential system or control information that enables the user device to send an access request. For example, information on physical signals and physical channels in downlink for cell search and selection, synchronization signals, Random Access Channel Information, Random Access Preamble Info and other types of system information enabling the user device to send an access request for obtaining an initial uplink grant to transmit uplink data specific for the user device.

The method 20 comprises receiving 22, by a second network node 7₁,..., 7ₙ, an access request from the legacy user device 10. The access request is sent in accordance with the first communication standard, since the legacy user device 10 is able to operate only in accordance with this standard. The access request is thus received in accordance with the first communication standard, enabled e.g. by the previously described legacy uplink receiver 12 of the second network node 7₁,..., 7ₙ.

The method 20 comprises enabling 23, by the second network node 7₁,..., 7ₙ, a communication channel for the legacy user device 10. This communication channel can be enabled in any of the described ways. The second network node 7₁,..., 7ₙ may for example enable the communication channel by relaying the received access request to the first network node 3₁, 3₂, and all subsequent communication is then relayed via the second network node 7₁,..., 7ₙ.

The transmitting 21 may for example comprises transmitting jointly, by all of the first network nodes 3₁, 3₂, the signal enabling the legacy user device 10 to obtain access to the communication system 1, 1', as described earlier. In an embodiment, all of the first network nodes 3₁, 3₂ are arranged in a single frequency network (SFN) and the transmitting jointly comprise single frequency network transmission.

The enabling 23 of a communication channel may comprise switching, in the second network node 7₁,..., 7ₙ, from the mode of operation according to the second communication standard, to a mode of operation according to the first communication standard, and providing, by the second network node 7₁,..., 7ₙ, the communication channel. The second network node then comprises means for communicating in both the legacy system as well as in the non-legacy system (i.e. by using the first communication standard and the second communication standard), and is also able to switch mode between operation in these systems.

The enabling 23 of a communication channel comprises, in another embodiment, relaying, from the second network node 7₁,..., 7ₙ, the received signaling to the first network node 3₁, 3₂, and providing, by the first network node 3₁, 3₂, the communication channel.

In an embodiment, the method 20 comprises determining, in the second network node 7₁,..., 7ₙ, a transmit timing of the access request received from the legacy user device 10, and correlating, in the second network node 7₁,..., 7ₙ, the determined transmit timing to a transmit timing used by the second network node 7₁,..., 7ₙ, the correlation giving a timing advance. Examples of such determining of the transmit timing comprise using a preamble of the access request received from the wireless device 10.

In an variation of the above two embodiments, the method 20 comprises relaying, from the second network node 6₁,..., 6ₙ, the timing advance to the first network node 3₁, 3₂, and transmitting, from the first network node 3₁, 3₂, the received timing advance to the legacy user device 10.

As described earlier, the communication system 10 may comprise a controller 4, and in an embodiment, the method 20 comprises receiving, in the controller 4, a status report from the second network node 6₁,..., 6ₙ, the status report indicating the number of user devices adapted to operate according to the second communication standard and located within a coverage area of the second network node 6₁,..., 6ₙ, and determining, based on the status report, activation or deactivation of the second network node 6₁,..., 6ₙ (also compare figure 7 and 8 and related text).

In an embodiment, the first network node 3₁, 3₂, operates in a first frequency band and the second network node 6₁,..., 6ₙ operates in a second frequency band, the first and second frequency bands being non-overlapping. Further, the first network node 3₁, 3₂) is configured to transmit at a higher power level than the second network node 7₁,..., 7ₙ. Further still, the second network node 7,..., 7ₙ may be configured to relay the signaling to the first network node 3₁, 3₂ via the controller 4.

The method 20 as described in various embodiments may thus be implemented in a communication system 1, 1' for wireless communication. The communication system 1, 1' comprises a first network node 3₁,..., 3ₙ adapted to operate in a mode of operation according to a first communication standard. The first network node 3₁,..., 3ₙ is configured to transmit a signal enabling a legacy user device 10 to obtain access to the communication system 1, 1'. The legacy user device 10 is configured to operate according to the first communication standard. The communication system 1, 1' further comprises a second network node 6₁,..., 6ₙ adapted to operate in a mode of operation according to a second communication standard. The second network node 6₁,..., 6ₙ is configured to receive an access request from the legacy user device 10, and to enable a communication channel for the legacy user device 10.

Figure 10 is a flow chart of a method performed in the hybrid radio unit 7₁,..., 7ₙ, in the following denoted a second network node. The method 30 is thus performed in the second network node 7₁,..., 7ₙ of a communication system 1, 1' as described. That is, the communication system 1, 1' is adapted for wireless communication and comprises a first network node 3₁, 3₂ adapted to operate in a mode of operation according to a first communication standard. The communication system 1, 1' further comprises a user device 10 adapted to operate according to the first communication standard. The second network node 7₁,..., 7ₙ is adapted to operate in a mode of operation according to a second communication standard, and also adapted to receive uplink signaling in accordance with the first communication standard.

The method 30 comprises receiving 31 an access request from the user device 10 in accordance with the first communication standard. The user device 10 has typically received system information in the signal s(t) sent from the first network node 3₁, 3₂, and is based on this system information able to send the access request.

The method 30 comprises enabling 32 a communication channel for the user device 10. The communication channel is enabled by relaying the received access request to the first network node 3₁, 3₂ or by switching from the mode of operation according to the second communication standard, to a mode of operation according to the first communication standard. In case of the second embodiment, i.e., switching to the mode of operation according to the first communication standard, the second network node 7₁,..., 7ₙ comprises also a downlink transmitter enabling it to send downlink signals according to the first communication protocol.

In an embodiment, the method 30 comprises determining a transmit timing of the access request received from the user device 10, and correlating the determined transmit timing to a transmit timing used by the second network node 7₁,..., 7ₙ. The correlation gives a timing advance.

In an embodiment, the enabling 32 of a communication channel comprises switching, in the second network node 7₁,..., 7ₙ, from the mode of operation according to the second communication standard to a mode of operation according to the first communication standard, and providing, by the second network node 6₁,..., 6ₙ, the communication channel. That is, the second network node 7₁,..., 7ₙ switches from the non-legacy system to the legacy system and comprises means (transmitter circuitry and receiver circuitry) to operate in both systems.

In an embodiment, the method 30 comprises determining type of user devices 10, 11, 17 located within its coverage area 8₁ and the activity thereof, and determining an activity mode of the second network node 7₁,..., 7ₙ based thereon; sending an activity mode report to a controller 4; receiving, from the controller 4, a power on or power off command based on the activity mode report; and entering an idle mode if receiving a power off command and entering an active mode if receiving a power on command (also compare figure 8 and related description).

In a variation of the above embodiment, the entering an idle mode comprises turning off components of the second network node 7₁,..., 7ₙ. Examples of such components comprise power amplifiers and antennas.

In another variation, the entering an active mode comprises turning on components of the second network node 7₁,..., 7ₙ, for example components such as power amplifiers and/or antennas.

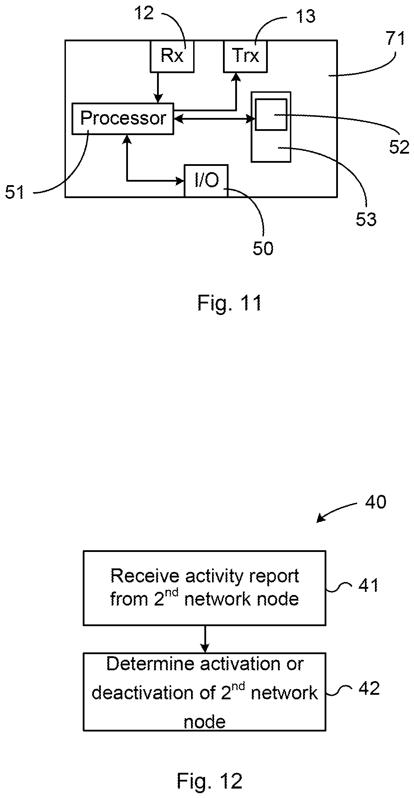

Figure 11 illustrates a second network node comprising exemplifying means for implementing embodiments of the methods as described. The second network node 7₁,..., 7ₙ comprises a processor unit 51 configured to perform the methods as described, and in particular configured to receive an access request from the user device 10 in accordance with the first communication standard, and enable a communication channel for the user device 10 by relaying the received access request to the first network node 3₁, 3₂ or by switching from the mode of operation according to the second communication standard, to a mode of operation according to the first communication standard.

The processor unit 51 may for example be a central processing unit, microcontroller, digital signal processor (DSP), etc., capable of executing software instructions, e.g. a computer program 52, stored in a computer program product 53 e.g. in the form of a memory. The processing unit 51 is thus able to retrieve data and/or instructions from such computer program product 53.

In an aspect, a computer program 52 for the second network node 7₁,..., 7ₙ c is provided. The computer program 52 comprises computer program code, which, when run on the processor unit 51 of the second network node 7₁,..., 7ₙ, causes the processor unit 51 to perform the steps of the methods as described.

In an aspect, a computer program product 53 for the second network node 7₁,..., 7ₙ is provided. The computer program product 53 comprises a computer program 52 as described above, and computer readable means on which the computer program 52 is stored. The computer program product 53 may for example comprise any combination of read and write memory (RAM) or read only memory (ROM). The computer program product 33 may also comprise persistent storage, which, for example can be any single one or combination of magnetic memory, optical memory, or solid state memory.

The second network node 7₁,..., 7ₙ comprises receiver circuitry 12 and transceiver circuitry 13 as described earlier, and also an input/output device 50 for communication with e.g. the controller 4.

Figure 12 is a flow chart of a method performed in a controller 4. The method 40 is performed in the controller 4 of a communication system 1, 1' as described. That is, adapted for wireless communication and comprising a first network node 3₁, 3₂) adapted to operate in a mode of operation according to a first communication standard and a user device 10 adapted to operate according to the first communication standard. The second network node 7₁,..., 7ₙ is adapted to operate in a mode of operation according to a second communication standard, and also adapted to receive uplink signaling in accordance with the first communication standard. The method 40 comprises receiving 41, from the second network node 7₁,..., 7ₙ, an activity mode report indicating the number of wireless devices 17 adapted to operate according to the second communication standard and located within a coverage area of the second network node 7₁,..., 7ₙ, and determining 42, based on the activity mode report, activation or deactivation of the second network node 7₁,..., 7ₙ (also compare figure 7 and related text).

In an embodiment, the determining 42 comprises deactivating the second network node 7₁,..., 7ₙ if the activity mode report indicates that there are no wireless devices 17 adapted to operate according to the second communication standard and located within a coverage area of the second network node 7₁,..., 7ₙ.

In an embodiment, the determining 42 is further based on a traffic load condition of the communication system 1, 1'.

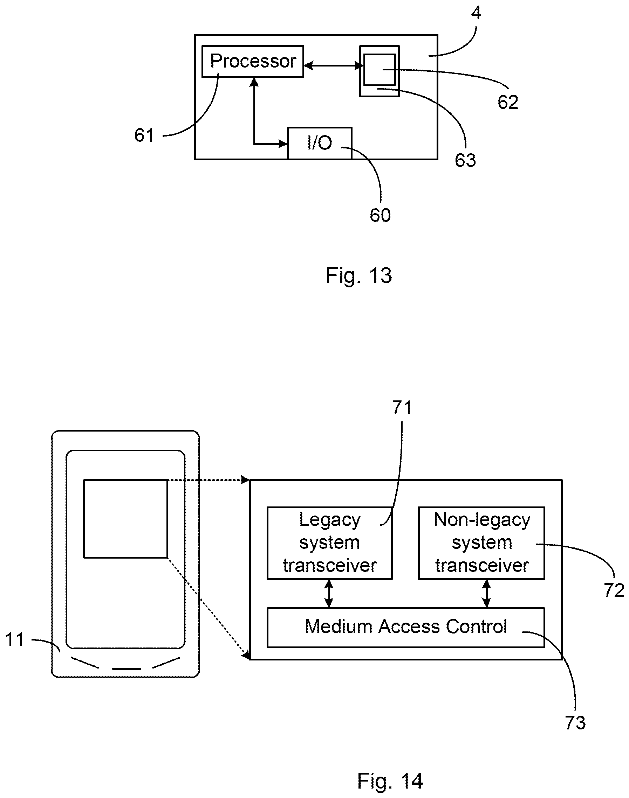

Figure 13 illustrates a controller comprising exemplifying means for implementing embodiments of the methods. The controller 4 is adapted for providing energy efficient operation of a communication system 1, 1' as described, i.e. adapted for wireless communication and comprising a first network node 3₁, 3₂ adapted to operate in a mode of operation according to a first communication standard and a user device 10 adapted to operate according to the first communication standard. The second network node 7₁,..., 7ₙ is adapted to operate in a mode of operation according to a second communication standard, and also adapted to receive uplink signaling in accordance with the first communication standard. The controller 4 comprises a processor unit 61 configured to perform the method as described. In particular, the processor unit 61 is configured to receive, from the second network node 7₁,..., 7ₙ, an activity mode report indicating the number of wireless devices 17 adapted to operate according to the second communication standard and located within a coverage area of the second network node 7₁,..., 7ₙ, and determine, based on the activity mode report, activation or deactivation of the second network node 7₁,..., 7ₙ.

In an aspect, a computer program 62 is provided for the controller 4. The computer program 62 comprises computer program code, which, when run on a processor unit 61 of the controller 4, causes the processor unit 61 to perform the steps of receiving, from the second network node 7₁,..., 7ₙ, an activity mode report indicating the number of wireless devices 17 adapted to operate according to the second communication standard and located within a coverage area of the second network node 7₁,..., 7ₙ, and determining, based on the activity mode report, activation or deactivation of the second network node 7₁,..., 7ₙ.

In an aspect, a computer program product 63 is provided, comprising a computer program 62 as described above, and computer readable means on which the computer program 62 is stored.

Figure 14 illustrates a hybrid user device 11, able to operate in accordance with a legacy protocol and in accordance with a new protocol. For sake of completeness, figure 14 illustrates a user device 11 that may communicate by using the described communication system. A legacy user device is unaware of the multitude of radio units of different categories involved in the multi-casting of the legacy signal s(t). Accordingly, no changes are needed for the legacy user device, since the communication system 1, 1' is fully backwards compatible.

The hybrid user device 11 is provided with circuitry 71 for performing part or all of the functions of the legacy user device, so that it is capable of receiving legacy downlink data channels. Using LTE as a particular example, the user device 11 may be configured to receive the physical downlink shared channel (PDSCH), which may carry information that is required to facilitate radio resource and mobility management. The user device 11 may also be configured to receive some control signaling transmitted by the legacy RRUs 3₁, 3₂. Again using LTE as a particular example, the user device may be configured to receive the physical downlink control channel (PDCCH), physical broadcast channel (PBCH) and/or other control/data channels, which may carry critical information regarding the legacy system or information required to receive legacy data channels. It is particularly noted that the user device 11 does not need to be fully compatible with the legacy system. It only needs to have the ability to transmit and/or receive some or all of the legacy physical channels so as to be able to utilize the large legacy cell 2. The legacy physical channels may be utilized by the controller 4 in order to manage the non-legacy system.

The hybrid user device 11 is thus also provided with circuitry 72 for performing operations in the non-legacy system.

The hybrid user device 11 may comprise a medium access controller 73 for implementing a medium access control (MAC) protocol, which may be used for channel access control mechanisms needed.

It is noted that the hybrid user device 11 comprises further components, conventionally used but which are omitted here for clarity. For example, the hybrid user device 11 may comprise radio front end circuitry, antennas, processing units, modulator, demodulator, display means, antennas etc.

When implementing the network architecture of the disclosure, the high power RRUs providing coverage and offering access to the communication system and therefore being in use all the time, may be diesel powered, for example, while it is often sufficient to power the low power radio nodes 7₁,..., 7ₙ by means of solar energy, for example, owing to the possibility of activating them only upon need.

## Claims

1. A method (30) performed in a second network node (7₁,...,7ₙ) of a communication system (1, 1') adapted for wireless communication and comprising a first network node (3₁, 3₂) adapted to operate in a mode of operation according to a first communication standard and a user device (10) adapted to operate according to the first communication standard, the first communication standard being a legacy standard, and the second network node (7₁,...,7ₙ) is adapted to operate in a mode of operation according to a second communication standard and adapted to receive uplink signaling in accordance with the first communication standard, the second communication standard being a non-legacy standard, the method (30) comprising :
receiving (31) an access request from the user device (10) in accordance with the first communication standard, and
enabling (32) a communication channel for the user device (10) by switching from the mode of operation according to the second communication standard, to the mode of operation according to the first communication standard.

2. The method (30) as claimed in claim 1, comprising:
determining a transmit timing of the access request received from the user device (10), and
correlating the determined transmit timing to a transmit timing used by the second network node (7₁,...,7ₙ), the correlation giving a timing advance.

3. The method (30) as claimed in claim 1 or 2, wherein the enabling (32) of the communication channel comprises:
switching, in the second network node (7₁,...,7ₙ), from the mode of operation according to the second communication standard, to the mode of operation according to the first communication standard, and
providing, by the second network node (7₁,...,7ₙ), the communication channel.

4. The method (30) as claimed in any of claims 1-3, comprising:
determining a type of user devices (10, 11, 17) located within coverage area (8₁) of the second network node (7₁,...,7ₙ) and activity of the user devices (10, 11, 17), and
determining an activity mode of the second network node (7₁, ..., 7ₙ) based thereon,
sending an activity mode report to a controller (4),
receiving, from the controller (4), a power on or power off command based on the activity mode report,
entering an idle mode if the power off command is received and
entering an active mode if the power on command is received.

5. The method (30) as claimed in claim 4, wherein the entering the idle mode comprises turning off components of the second network node (7₁,...,7ₙ), and wherein the entering the active mode comprises turning on components of the second network node (7₁,...,7ₙ).

6. A second network node (7₁,...,7ₙ) of a communication system (1, 1') adapted for wireless communication and the communication system (1, 1') further comprising a first network node (3₁, 3₂) adapted to operate in a mode of operation according to a first communication standard and a user device (10) adapted to operate according to the first communication standard, the first communication standard being a legacy standard, and the second network node (7₁,...,7ₙ) is adapted to operate in a mode of operation according to a second communication standard and adapted to receive uplink signaling in accordance with the first communication standard, the second communication standard being a non-legacy standard, the second network node (7₁,...,7ₙ) comprising a processor unit (51) configured to:
receive an access request from the user device (10) in accordance with the first communication standard, and
enable a communication channel for the user device (10) by switching from the mode of operation according to the second communication standard, to the mode of operation according to the first communication standard.

7. A computer program (52) for a second network node (7₁,...,7ₙ) of a communication system (1, 1') adapted for wireless communication and comprising a first network node (3₁, 3₂) adapted to operate in a mode of operation according to a first communication standard and a user device (10) adapted to operate according to the first communication standard, the first communication standard being a legacy standard, and the second network node (7₁, ..., 7ₙ) is adapted to operate in a mode of operation according to a second communication standard and adapted to receive uplink signaling in accordance with the first communication standard, the second communication standard being a non-legacy standard, the computer program (52) comprising computer program code, which, when run on a processor unit (51) of the second network node (7₁,...,7ₙ), causes the processor unit (51) to perform the steps of:
receiving an access request from the user device (10) in accordance with the first communication standard, and
enabling a communication channel for the user device (10) by switching from the mode of operation according to the second communication standard, to a mode of operation according to the first communication standard.

8. A computer program product (53) comprising a computer program (52) as claimed in claim 7, and computer readable means on which the computer program (52) is stored.

## Patentansprüche

1. Verfahren (30), das in einem zweiten Netzwerkknoten (7₁,...,7ₙ) eines Kommunikationssystems (1, 1') durchgeführt wird, das für eine drahtlose Kommunikation angepasst ist und umfassend einen ersten Netzwerkknoten (3₁, 3₂), der angepasst ist, um in einem Betriebsmodus gemäß einem ersten Kommunikationsstandard betrieben zu werden und eine Benutzervorrichtung (10), die angepasst ist, um gemäß dem ersten Kommunikationsstandard betrieben zu werden, wobei der erste Kommunikationsstandard ein Legacy-Standard ist, und der zweite Netzwerkknoten (7₁,...,7ₙ) angepasst ist, um in einem Betriebsmodus gemäß einem zweiten Kommunikationsstandard betrieben zu werden und angepasst ist, um eine Uplink-Signalisierung gemäß dem ersten Kommunikationsstandard zu empfangen, wobei der zweite Kommunikationsstandard ein Nicht-Legacy-Standard ist, wobei das Verfahren (30) Folgendes umfasst:
Empfangen (31) einer Zugriffsanfrage von der Benutzervorrichtung (10) gemäß dem ersten Kommunikationsstandard und
Freigeben (32) eines Kommunikationskanals für die Benutzervorrichtung (10), indem von dem Betriebsmodus gemäß dem zweiten Kommunikationsstandard in den Betriebsmodus gemäß dem ersten Kommunikationsstandard geschaltet wird.

2. Verfahren (30) nach Anspruch 1, umfassend:
Bestimmen einer Übertragungszeit der Zugriffsanfrage, die von der Benutzervorrichtung (10) empfangen wurde und
Korrelieren der bestimmten Übertragungszeit mit einer Übertragungszeit, die von dem zweiten Netzwerkknoten (7₁,...,7ₙ) verwendet wird, wobei die Korrelation ein Timing Advance ergibt.

3. Verfahren (30) nach Anspruch 1 oder 2, wobei das Freigeben (32) des Kommunikationskanals Folgendes umfasst:
Schalten, in dem zweiten Netzwerkknoten (7₁,...,7ₙ), von dem Betriebsmodus gemäß dem zweiten Kommunikationsstandard in den Betriebsmodus gemäß dem ersten Kommunikationsstandard und
Bereitstellen des Kommunikationskanals durch den zweiten Netzwerkknoten (7₁,...,7ₙ).

4. Verfahren (30) nach einem der Ansprüche 1-3, umfassend:
Bestimmen einer Art von Benutzervorrichtungen (10, 11, 17), die sich in dem Abdeckungsbereich (8₁) des zweiten Netzwerkknotens (7₁,...,7ₙ) befinden und einer Aktivität der Benutzervorrichtungen (10, 11, 17) und
Bestimmen eines Aktivitätsmodus des zweiten Netzwerkknotens (7₁,...,7ₙ) auf dieser Grundlage,
Senden einer Aktivitätsmodusmeldung an eine Steuerung (4), Empfangen, von der Steuerung (4), eines Ein- oder Ausschaltbefehls auf Grundlage der Aktivitätsmodusmeldung,
Eintreten in einen Ruhezustand, wenn der Ausschaltbefehl empfangen wird und
Eintreten in einen aktiven Modus, wenn der Einschaltbefehl empfangen wird.

5. Verfahren (30) nach Anspruch 4, wobei das Eintreten in den Ruhezustand das Abschalten von Komponenten des zweiten Netzwerkknotens (7₁,...,7ₙ) umfasst, und wobei das Eintreten in den aktiven Modus das Anschalten von Komponenten des zweiten Netzwerkknotens (7₁,...,7ₙ) umfasst.

6. Zweiter Netzwerkknoten (7₁,...,7ₙ) eines Kommunikationssystems (1, 1'), das für eine drahtlose Kommunikation angepasst ist und wobei das Kommunikationssystem (1, 1') ferner einen ersten Netzwerkknoten (3₁, 3₂), der angepasst ist, um in einem Betriebsmodus gemäß einem ersten Kommunikationsstandard betrieben zu werden und eine Benutzervorrichtung (10) umfasst, die angepasst ist, um gemäß dem ersten Kommunikationsstandard betrieben zu werden, wobei der erste Kommunikationsstandard ein Legacy-Standard ist, und der zweite Netzwerkknoten (7₁,...,7ₙ) angepasst ist, um in einem Betriebsmodus gemäß einem zweiten Kommunikationsstandard betrieben zu werden und angepasst ist, um eine Uplink-Signalisierung gemäß dem ersten Kommunikationsstandard zu empfangen, wobei der zweite Kommunikationsstandard ein Nicht-Legacy-Standard ist, wobei der zweite Netzwerkknoten (7₁,...,7ₙ) eine Prozessoreinheit (51) umfasst, die zu Folgendem konfiguriert ist:
Empfangen einer Zugriffsanfrage von der Benutzervorrichtung (10) gemäß dem ersten Kommunikationsstandard und
Freigeben eines Kommunikationskanals für die Benutzervorrichtung (10), indem von dem Betriebsmodus gemäß dem zweiten Kommunikationsstandard in den Betriebsmodus gemäß dem ersten Kommunikationsstandard geschaltet wird.

7. Computerprogramm (52) für einen zweiten Netzwerkknoten (7₁,...,7ₙ) eines Kommunikationssystems (1, 1'), das für eine drahtlose Kommunikation angepasst ist und umfassend einen ersten Netzwerkknoten (3₁, 3₂), der angepasst ist, um in einem Betriebsmodus gemäß einem ersten Kommunikationsstandard betrieben zu werden und eine Benutzervorrichtung (10), die angepasst ist, um gemäß dem ersten Kommunikationsstandard betrieben zu werden, wobei der erste Kommunikationsstandard ein Legacy-Standard ist, und der zweite Netzwerkknoten (7₁,...,7ₙ) angepasst ist, um in einem Betriebsmodus gemäß einem zweiten Kommunikationsstandard betrieben zu werden und angepasst ist, um eine Uplink-Signalisierung gemäß dem ersten Kommunikationsstandard zu empfangen, wobei der zweite Kommunikationsstandard ein Nicht-Legacy-Standard ist, wobei das Computerprogramm (52) Computerprogrammcode umfasst, welcher, wenn er auf einer Prozessoreinheit (51) des zweiten Netzwerkknotens (7₁,...,7ₙ) ausgeführt wird, veranlasst, dass die Prozessoreinheit (51) die folgenden Schritte ausführt:
Empfangen einer Zugriffsanfrage von der Benutzervorrichtung (10) gemäß dem ersten Kommunikationsstandard und
Freigeben eines Kommunikationskanals für die Benutzervorrichtung (10), indem von dem Betriebsmodus gemäß dem zweiten Kommunikationsstandard in einen Betriebsmodus gemäß dem ersten Kommunikationsstandard geschaltet wird.

8. Computerprogrammprodukt (53), umfassend ein Computerprogramm (52) nach Anspruch 7, und ein computerlesbares Mittel, auf dem das Computerprogramm (52) gespeichert ist.

## Revendications

1. Procédé (30) effectué dans un deuxième noeud de réseau (7₁, ..., 7ₙ) d'un système de communication (1, 1') adapté pour une communication sans fil et comprenant un premier noeud de réseau (3₁, 3₂) adapté pour fonctionner dans un mode de fonctionnement selon une première norme de communication et un dispositif utilisateur (10) adapté pour fonctionner selon la première norme de communication, la première norme de communication étant une norme héritée, et le deuxième noeud de réseau (7₁, ..., 7ₙ) est adapté pour fonctionner dans un mode de fonctionnement selon une deuxième norme de communication et adapté pour recevoir une signalisation montante conformément à la deuxième norme de communication, la deuxième norme de communication étant une norme non héritée, le procédé (30) comprenant :
la réception (31) d'une demande d'accès à partir du dispositif utilisateur (10) conformément à la première norme de communication, et
l'habilitation (32) d'un canal de communication pour le dispositif utilisateur (10) en commutant du mode de fonctionnement selon la deuxième norme de communication au mode de fonctionnement selon la première norme de communication.

2. Procédé (30) selon la revendication 1, comprenant :
la détermination d'une synchronisation de transmission de la demande d'accès reçue à partir du dispositif utilisateur (10), et
la mise en corrélation de la synchronisation de transmission déterminée avec une synchronisation de transmission utilisée par le deuxième noeud de réseau (7₁, ..., 7ₙ), la corrélation donnant une avance de synchronisation.

3. Procédé (30) selon la revendication 1 ou 2, dans lequel l'habilitation (32) du canal de communication comprend :
la commutation, dans le deuxième noeud de réseau (7₁, ..., 7ₙ), du mode de fonctionnement selon la deuxième norme de communication au mode de fonctionnement selon la première norme de communication, et
la fourniture, par le deuxième noeud de réseau (7₁, ..., 7ₙ), du canal de communication.

4. Procédé (30) selon l'une quelconque des revendications 1 à 3, comprenant :
la détermination d'un type de dispositifs utilisateurs (10, 11, 17) situés dans la zone de couverture (8₁) du deuxième noeud de réseau (7₁, ..., 7ₙ) et d'une activité des dispositifs utilisateurs (10, 11, 17), et
la détermination d'un mode d'activité du deuxième noeud de réseau (7₁, ..., 7ₙ) sur la base de ceux-ci,
l'envoi d'un rapport de mode d'activité à un dispositif de commande (4),
la réception, à partir du dispositif de commande (4), d'une commande d'activation ou de désactivation sur la base du rapport de mode d'activité,
le passage dans un mode inactif si la commande de désactivation est reçue et
le passage dans un mode actif si la commande d'activation est reçue.

5. Procédé (30) selon la revendication 4, dans lequel le passage dans le mode inactif comprend la désactivation de composants du deuxième noeud de réseau (7₁, ..., 7ₙ) et dans lequel le passage dans le mode actif comprend l'activation de composants du deuxième noeud de réseau (7₁, ..., 7ₙ).

6. Deuxième noeud de réseau (7₁, ..., 7ₙ) d'un système de communication (1, 1') adapté pour une communication sans fil et le système de communication (1, 1') comprenant en outre un premier noeud de réseau (3₁, 3₂) adapté pour fonctionner dans un mode de fonctionnement selon une première norme de communication et un dispositif utilisateur (10) adapté pour fonctionner selon la première norme de communication, la première norme de communication étant une norme héritée, et le deuxième noeud de réseau (7₁, ..., 7ₙ) est adapté pour fonctionner dans un mode de fonctionnement selon une deuxième norme de communication et adapté pour recevoir une signalisation montante conformément à la deuxième norme de communication, la deuxième norme de communication étant une norme non héritée, le deuxième noeud de réseau (7₁, ..., 7ₙ) comprenant une unité de processeur (51) configurée pour :
recevoir une demande d'accès à partir du dispositif utilisateur (10) conformément à la première norme de communication, et
habiliter un canal de communication pour le dispositif utilisateur (10) en commutant du mode de fonctionnement selon la deuxième norme de communication au mode de fonctionnement selon la première norme de communication.

7. Programme informatique (52) pour un deuxième noeud de réseau (7₁, ..., 7ₙ) d'un système de communication (1, 1') adapté pour une communication sans fil et comprenant un premier noeud de réseau (3₁, 3₂) adapté pour fonctionner dans un mode de fonctionnement selon une première norme de communication et un dispositif utilisateur (10) adapté pour fonctionner selon la première norme de communication, la première norme de communication étant une norme héritée, et le deuxième noeud de réseau (7₁, ..., 7ₙ) est adapté pour fonctionner dans un mode de fonctionnement selon une deuxième norme de communication, la deuxième norme de communication étant une norme non héritée, le programme informatique (52) comprenant un code de programme informatique qui, quand il est exécuté sur une unité de processeur (51) du deuxième noeud de réseau (7₁, ..., 7ₙ), amène l'unité de processeur (51) à effectuer les étapes suivantes :
la réception d'une demande d'accès à partir du dispositif utilisateur (10) conformément à la première norme de communication, et
l'habilitation d'un canal de communication pour le dispositif utilisateur (10) en commutant du mode de fonctionnement selon la deuxième norme de communication à un mode de fonctionnement selon la première norme de communication.

8. Produit de programme informatique (53) comprenant un programme informatique (52) selon la revendication 7, et des moyens lisibles par ordinateur sur lesquels le programme informatique (52) est stocké.
